# EUROPEAN PATENT APPLICATION

(11) **EP 4 635 329 A1**
(43) Date of publication of application: **22.10.2025**
(21) Application number: 22968560.7
(22) Date of filing: 16.12.2022
(51) Int. Cl.: A24F 40/50

(54) **POWER SUPPLY UNIT FOR AEROSOL-GENERATING DEVICE, AND AEROSOL-GENERATING DEVICE**

(71) Applicant: Japan Tobacco Inc., Tokyo 105-6927 (JP)
(72) Inventor: MINATO, Junji, Tokyo 130-8603 (JP); KAWANAGO, Hiroshi, Tokyo 130-8603 (JP); ICHINOSE, Atsushi, Tokyo 130-8603 (JP)
(74) Representative: Hoffmann Eitle
(86) International application number: PCT/JP2022/046472
(87) International publication number: WO 2024/127651

(57) **Abstract**

A power supply unit (110) of an inhalation device (100) comprises: a power source unit (111C) capable of supplying power to a heating unit (121C) for heating at least one of a stick-type substrate (150) and a flavor source (131); and a sensor FPC (73) on which are mounted a stick detection sensor (12), an inhalation sensor (13), a case temperature sensor (14), signal wiring (733), and ground wiring (734). The sensor FPC (73) has a first region (A1) close to the heating unit (121C), and a second region (A2) which is further from the heating unit (121C) than the first region (A1). A wiring density in the first region (A1) of the sensor FPC (73) is lower than a wiring density in the second region (A2).

## Description

### TECHNICAL FIELD

The present disclosure relates to a power supply unit for an aerosol-generating device, and to an aerosol-generating device.

### BACKGROUND ART

Aerosol-generating devices have a case which accommodates a power source, a heating unit, a plurality of sensors, and a circuit board on which the sensors and a control device are mounted, among other things. Aerosol-generating devices may further employ a flexible printed circuit board in order to achieve a reduction in size. For example, PTL 1 describes an aerosol-generating device comprising a rigid board and a flexible printed circuit board.

### CITATION LIST

### PATENT LITERATURE

PTL 1: JP 2021-083383 A

### SUMMARY OF INVENTION

### TECHNICAL PROBLEM

Aerosol-generating devices need to heat an aerosol source with high energy efficiency. Printed wiring such as signal wiring and ground wiring is formed on a flexible printed circuit board, and this printed wiring often employs materials having high thermal conductivity, such as copper and gold, for example. Consequently, when the printed wiring of a flexible printed circuit board is formed at a position close to the heating unit in an aerosol-generating device, the printed wiring may dissipate the heat generated by the heating unit, leading to a drop in energy efficiency.

The present disclosure provides a power supply unit for an aerosol-generating device having high energy efficiency, and also provides an aerosol-generating device.

### SOLUTION TO PROBLEM

A power supply unit for an aerosol-generating device according to the present disclosure comprises:
a power source capable of supplying power to a heating unit for heating at least one of an aerosol source and a flavor source; and
a flexible printed wiring board on which at least one element and/or wiring is mounted, and
the flexible printed wiring board has a first region close to the heating unit, and a second region which is further from the heating unit than the first region, and
a wiring density in the first region of the flexible printed wiring board is lower than a wiring density in the second region.

An aerosol-generating device according to the present disclosure comprises:
a heating unit for heating at least one of an aerosol source and a flavor source;
a power source capable of supplying power to the heating unit; and
a flexible printed wiring board on which at least one element and/or wiring is mounted,
   and
the flexible printed wiring board has a first region close to the heating unit, and a second region which is further from the heating unit than the first region, and
a wiring density in the first region of the flexible printed wiring board is lower than a wiring density in the second region.

### ADVANTAGEOUS EFFECTS OF INVENTION

The present disclosure makes it possible to achieve high energy efficiency.

### BRIEF DESCRIPTION OF DRAWINGS

Fig. 1 is a schematic diagram schematically showing a first configuration example of an inhalation device (inhalation device 100A).
Fig. 2 is a schematic diagram schematically showing a second configuration example of an inhalation device (inhalation device 100B).
Fig. 3 is an overall oblique view of an inhalation device 100 constituting an embodiment of the inhalation device according to the present disclosure.
Fig. 4 is an oblique view of an internal unit 10 seen from the front right side.
Fig. 5 is an oblique view of the internal unit 10 seen from the front left side.
Fig. 6 is an exploded oblique view of the internal unit 10.
Fig. 7 is a cross-sectional oblique view of a heater assembly 30.
Fig. 8 is a block diagram showing electrical connections of main elements of the internal unit 10 in a simple manner.
Fig. 9 is a developed view of a front surface of a sensor FPC 73.
Fig. 10 is a developed view of a rear surface of the sensor FPC 73.
Fig. 11 is a cross-sectional view in which a first wiring layer 73L1 is seen from the front surface side of the sensor FPC 73.
Fig. 12 is a cross-sectional view in which second wiring layer 73L2 is seen from the front surface side of the sensor FPC 73.
Fig. 13 is a main part oblique view in which main parts in the vicinity of the sensor FPC 73 are seen from obliquely above, from a front right direction.
Fig. 14 is a main part oblique view in which main parts in the vicinity of the sensor FPC 73 are seen from obliquely above, from a rear left direction.

### DESCRIPTION OF EMBODIMENTS

An inhalation device, control method, and program according to an embodiment of the present disclosure will be described below with reference to the drawings. Two configuration examples (a first configuration example and a second configuration example) to which the configuration of the inhalation device according to the present disclosure can be applied will be described first of all. It should be noted that, hereinafter, identical or similar components will be assigned identical or similar reference signs, and descriptions thereof may be omitted or simplified, as appropriate.

### 1. Configuration example of inhalation device

An inhalation device is a device for generating a substance to be inhaled by a user. Hereinafter, the substance generated by the inhalation device will be described as being an aerosol. Additionally, the substance generated by the inhalation device may be a gas.

### (1) First configuration example

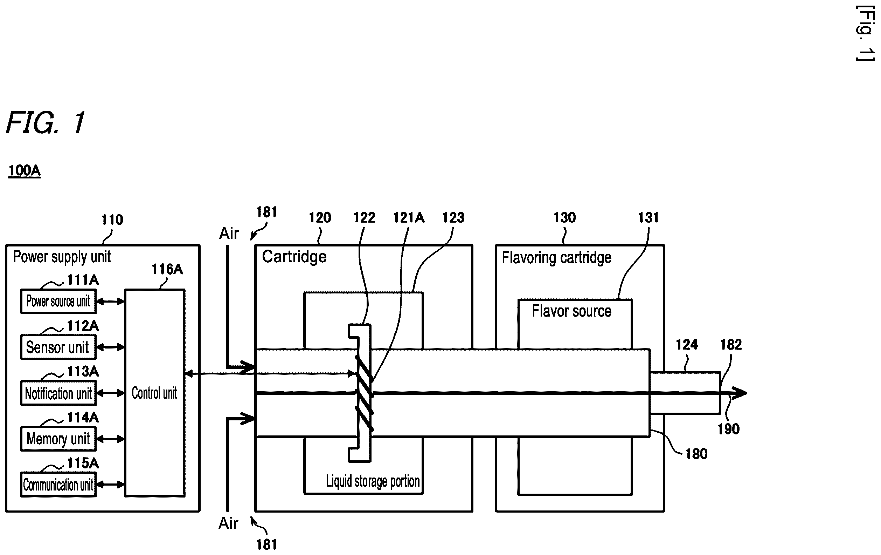

Fig. 1 is a schematic diagram schematically showing a first configuration example of an inhalation device. As shown in fig. 1, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow passage 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. As an example, the sensor unit 112A is configured from a pressure sensor such as a capacitor microphone, a flow rate sensor or a temperature sensor, and so on, and acquires values associated with inhalation by a user. As another example, the sensor unit 112A is configured by an input device, such as a button or switch, for accepting input of information from the user.

The notification unit 113A notifies the user of information. The information notified to the user by the notification unit 113A includes, for example, a state of charge (SOC) indicating the state of charge of the power source unit 111A, a preheating time at the time of inhalation, and an inhalation-possible period, etc. The notification unit 113A can be configured by a light-emitting device which emits light, a display device which displays images, a sound output device which outputs sound, or a vibration device which vibrates, etc., for example.

The memory unit 114A stores various types of information for the operation of the inhalation device 100A. The memory unit 114A can be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. The control unit 116A is realized by a central processing unit (CPU) or an electronic circuit such as a microprocessor, for example.

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include tobacco-derived or non-tobacco-derived flavor components. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 1, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. As an example, electricity may be supplied to the heating unit 121A when the sensor unit 112A has detected that the user has started inhaling and/or that predetermined information has been input. The supply of electricity to the heating unit 121A may then be stopped when the sensor unit 112A has detected that the user has finished inhaling and/or that predetermined information has been input. Note that the inhalation action of the user on the inhalation device 100A is detectable, for example, based on pressure (internal pressure) exceeding a predetermined threshold in the inhalation device 100A detected by an inhalation sensor.

The flavor source 131 is a component for imparting a flavor component to the aerosol. The flavor source 131 may include tobacco-derived or non-tobacco-derived flavor components.

The air flow passage 180 is a flow passage for air to be inhaled by the user. The air flow passage 180 has a tubular structure with an air inflow hole 181, which is an inlet for air into the air flow passage 180, and an air outflow hole 182, which is an outlet for air from the air flow passage 180, at the two ends thereof. Along the air flow passage 180, the liquid guiding portion 122 is disposed on the upstream side (the side closer to the air inflow hole 181), and the flavor source 131 is disposed on the downstream side (the side closer to the air outflow hole 182). Air flowing in through the air inflow hole 181 as the user inhales is mixed with the aerosol generated by the heating unit 121A and transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth to make it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating provided by the heating unit 121A. For example, the means for atomizing the aerosol source may be vibration atomization or induction heating.

### (2) Second configuration example

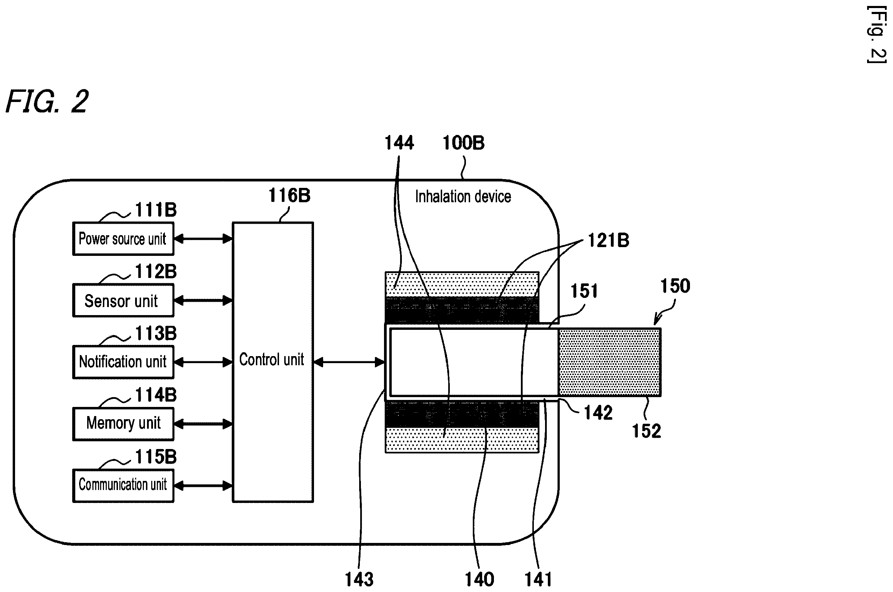

Fig. 2 is a schematic diagram schematically showing a second configuration example of an inhalation device. As shown in fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144. The power supply unit 110 accommodating the power source unit 111A, and the heating unit 121A were separate elements in the inhalation device 100A of the first configuration example, but the power source unit 111B and the heating unit 121B constitute a single piece in the inhalation device 100B of the second configuration example. That is, the inhalation device 100B of the second configuration example can also be said to have a power supply unit with a built-in heating unit.

The power source unit 111B, sensor unit 112B, notification unit 113B, memory unit 114B, communication unit 115B, and control unit 116B are each substantially the same as the corresponding component included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines the columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow passage to the internal space 141, is disposed in the bottom portion 143, for example.

The stick-type substrate 150 comprises a substrate portion 151 and a mouthpiece portion 152. The substrate portion 151 contains an aerosol source. The aerosol source comprises a tobacco-derived or non-tobacco-derived flavor component. If the inhalation device 100B is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow passage, which is not illustrated on the drawings, and reaches the inside of the user's mouth together with the aerosol generated from the substrate portion 151.

In the example shown in fig. 2, the heating unit 121B has a film-like form and is arranged so as to cover the outer circumference of the accommodating portion 140. Then, when the heating unit 121B generates heat, the substrate portion 151 of the stick-type substrate 150 is heated from the outer circumference, generating the aerosol.

The heat insulating portion 144 prevents heat transfer from the heating unit 121B to other components. For example, the heat insulating portion 144 is configured by a vacuum insulating material or an aerogel insulating material, etc.

A configuration example of the inhalation device 100B has been described above. The inhalation device 100B is, of course, not limited to the configuration described above, and various configurations may be adopted, such as those illustrated below as examples.

As one example, the heating unit 121B may have a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 that has been inserted into the internal space 141. In this case, the heating unit 121B may be provided on the gripping part of the accommodating portion 140, and may heat the stick-type substrate 150 while pressing the same.

Furthermore, the means for atomizing the aerosol source is not limited to heating provided by the heating unit 121B. For example, the means for atomizing the aerosol source may be induction heating. In this case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating portion 121A, the liquid guiding portion 122, the liquid storage portion 123 and the air flow passage 180 according to the first configuration example, and the air flow passage 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### 2. Configuration example of inhalation device according to the present disclosure

Next, an embodiment of the inhalation device (hereinafter referred to as the inhalation device 100) applying the configuration of the inhalation device of the present disclosure is described in relation to the inhalation device 100B of the second configuration example previously described. Note that although the specific description is omitted, some of the configuration of the inhalation device 100 elaborated below can also be applied to the inhalation device 100A of the first configuration example.

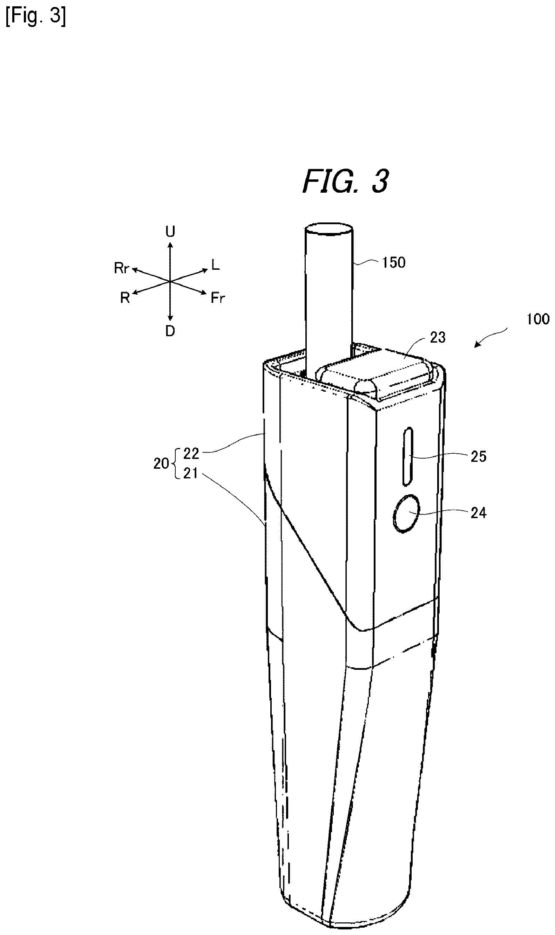

Fig. 3 is an overall oblique view of the inhalation device 100. In the following, in the inhalation device 100, the insertion and removal direction of the stick-type substrate 150 relative to the inhalation device 100 is defined as the vertical direction, the sliding movement direction of a shutter 23 described below is defined as the front-rear direction, and the direction perpendicular to the vertical direction and the front-rear direction is defined as the left-right direction. Also, as shown in the figures, Fr is the front, Rr is the rear, L is the left side, R is the right side, U is up, and D is down.

The inhalation device 100 is preferably sized to fit in the hand, for example, having a rod shape. For example, the user holds the inhalation device 100 in one hand, with fingertips in contact with surfaces of the inhalation device 100. Note that the shape of the inhalation device 100 is not limited to a rod shape, but can be any shape (e.g., a rounded substantially cuboid shape or an ovoid shape).

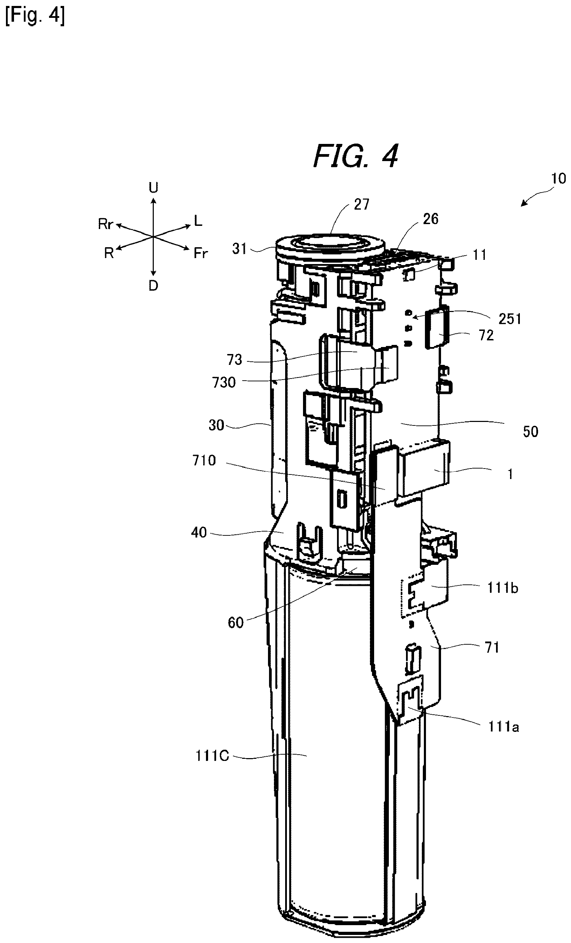

The inhalation device 100 comprises an internal unit 10 (see fig. 4-6), and a case 20 that constitutes the external appearance of the inhalation device 100. The case 20 has a lower case 21 and an upper case 22. A portion of the internal unit 10 is accommodated in the lower case 21, and the entire internal unit 10 is accommodated in the case 20 by covering the lower case 21 with the upper case 22 from above.

The upper face of the inhalation device 100 is provided with an opening 27 (see fig. 4 to 6) for inserting and removing the stick-type substrate 150, and a shutter 23 that can slide in the front-rear direction. The opening 27 is arranged on the rear side of the upper face of the inhalation device 100. The shutter 23 selectively takes an open state (front-side position) that allows insertion and removal of the stick-type substrate 150 by opening the opening 27, and a closed state (rear-side position) that closes the opening 27 by positioning the shutter 23 above the opening 27. When inserting the stick-type substrate 150 into the opening 27, the user sets the shutter 23 to the open state.

A shutter detection sensor 11 (see fig. 4) is provided near the shutter 23. The shutter detection sensor 11 detects whether or not the shutter 23 is in the open state. The shutter detection sensor 11 is an example of the sensor unit 112B of the inhalation device 100B of fig. 2.

Additionally, the upper surface of the inhalation device 100 is provided with a USB (Universal Serial Bus) port 26 (see fig. 4) arranged adjacent to the opening 27. In the open state described above, the shutter 23 blocks the USB port 26. On the other hand, in the closed state described above, the shutter 23 does not block the USB port 26, and the USB port 26 is open. The USB port 26 is configured to be electrically connectable with an external power source (not shown in the drawings) capable of supplying power to charge a power source unit 111C (see fig. 4). The USB port 26 is, for example, a receptacle in which a partnering plug can be inserted. As an example, in this embodiment, the USB port 26 is a USB Type-C receptacle.

An operation unit 24 and a light-emitting unit 25 are provided on the front face of the inhalation device 100. The operation unit 24 is arranged below the light-emitting unit 25. More specifically, the operation unit 24 and the light-emitting unit 25 are components of the internal unit 10 accommodated in the case 20, and a part of the operation unit 24 and the light-emitting unit 25 is configured to be exposed from an opening formed on the front face of the case 20. The light-emitting unit 25 is an example of the notification unit 113B of the inhalation device 100B shown in fig. 2.

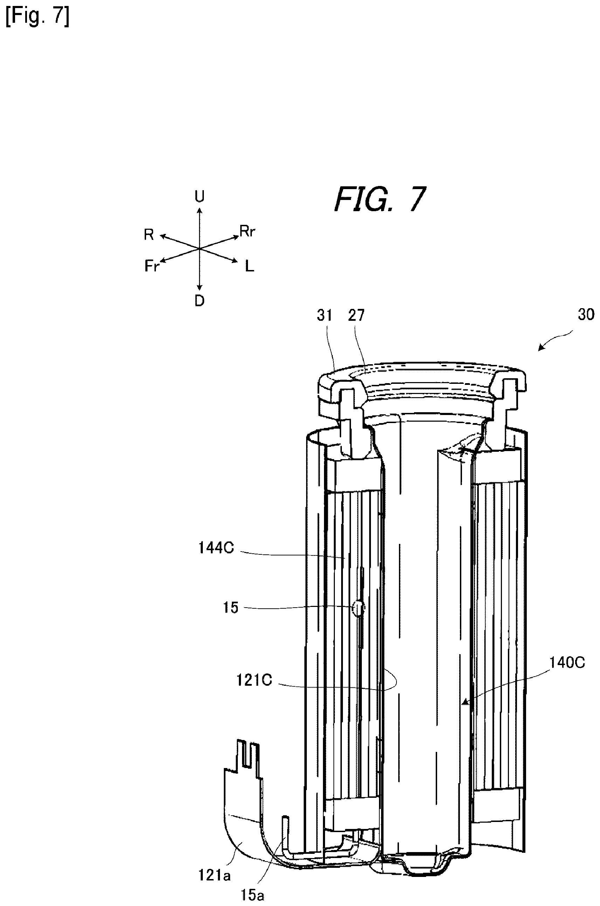

The operation unit 24 is a button-type switch that can be operated by a user, and is an input device for receiving input of information from a user. The operation unit 24 is connected to a main board 50 which will be described later (see fig. 4 to 6). The user pressing the operation unit 24, for example, activates a Micro Controller Unit (MCU) 1 (see fig. 4-6) or a heating unit 121C (see fig. 7). Note that the MCU 1 functions as the control unit 116B in the inhalation device 100B. In addition to the function of the control unit 116B in the inhalation device 100B, the MCU 1 may also incorporate the function of the communication unit 115B. Furthermore, the MCU 1 may be composed of a single IC or two or more ICs. For example, control of discharge to the heating unit 121C and control of charging of the power source unit 111C may be performed by a single IC or by separate ICs.

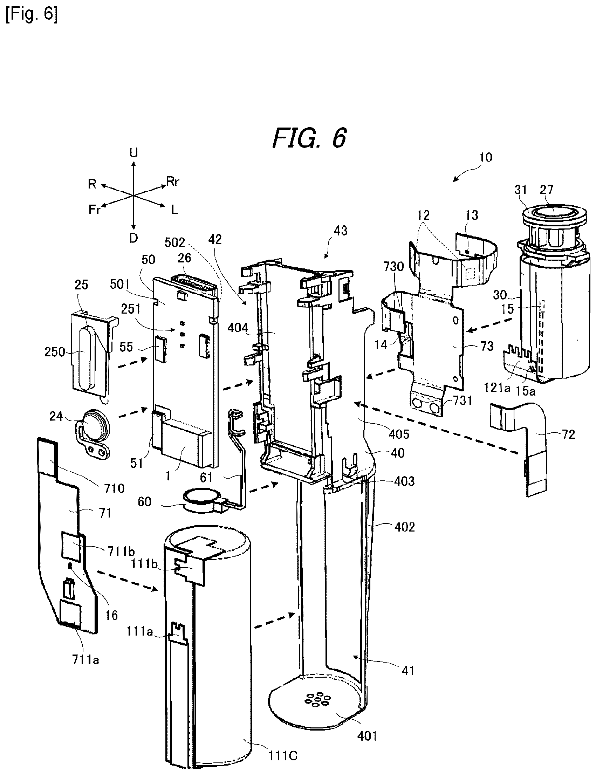

The light-emitting unit 25 is configured by a light-emitting device such as a light-emitting diode (LED), for example. More specifically, the light-emitting unit 25 includes multiple LEDs 251 (see fig. 6) provided on the main board 50, and a transparent cover 250 that covers the multiple LEDs 251 and transmits the light of the multiple LEDs 251. A portion of the transparent cover 250 is exposed through an opening formed in the front face of the case 20. In this embodiment, for example, it is assumed that the multiple LEDs 251 are configured to be capable of emitting light in a plurality of colors, including blue, yellow and red. Note that any number of light-emitting elements may be set, for example there may be one light emitting element in the light-emitting unit 25.

The light-emitting unit 25 emits light in a predetermined light-emitting mode by a command from the MCU 1 to notify the user of predetermined information. Here, the light-emitting mode may be, for example, a color of light emission, but this is not limiting, and it may be, for example, the intensity of illumination (in other words luminance) or an illumination pattern (e.g., flashing at predetermined time intervals), etc. Also, the predetermined information is, for example, operating information indicating whether the inhalation device 100 is powered on or not.

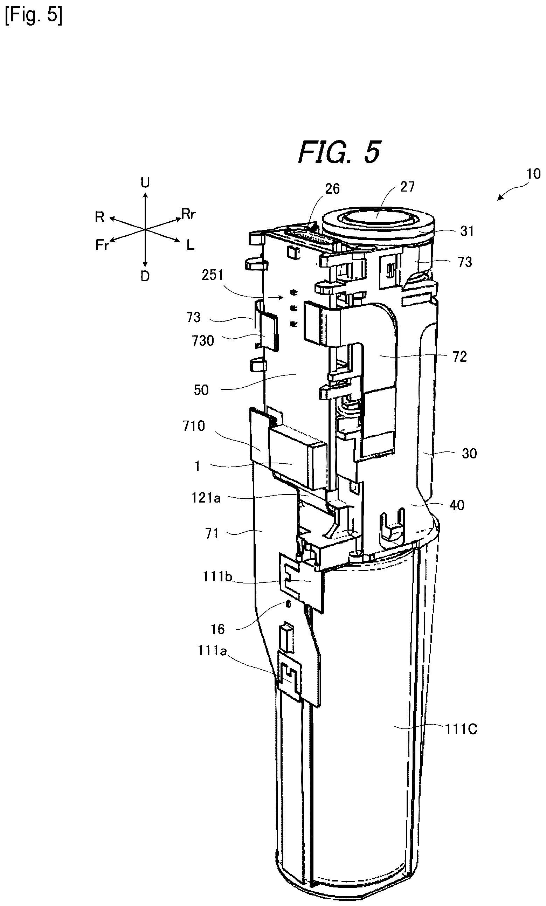

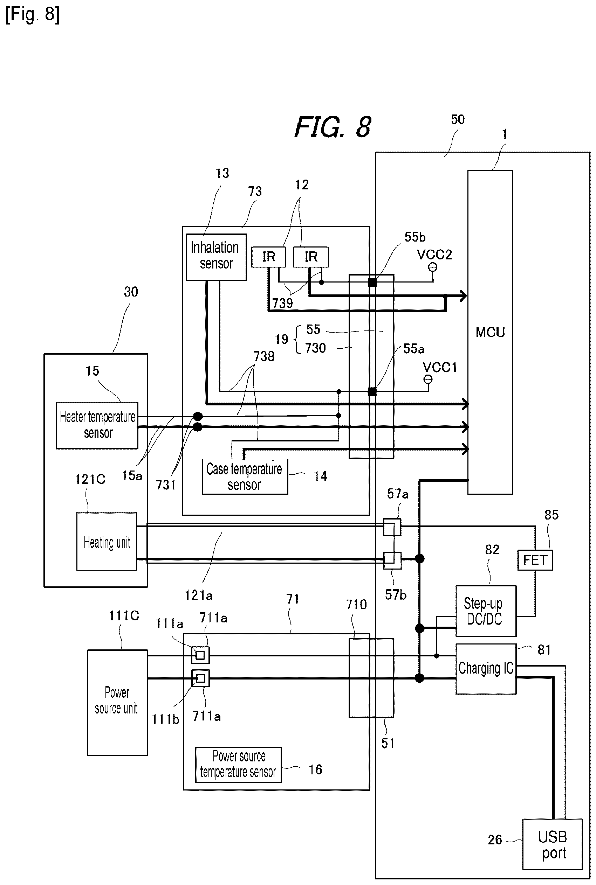

The internal unit 10 of the inhalation device 100 according to this embodiment will be described next with reference to fig. 4-8. Fig. 4 is an oblique view of the internal unit 10 seen from the front right side; fig. 5 is an oblique view of the internal unit 10 seen from the front left side; fig. 6 is an exploded oblique view of the internal unit 10; fig. 7 is a cross-sectional oblique view of a heater assembly 30; and fig. 8 is a block diagram showing electrical connections of main elements of the internal unit 10 in a simple manner. Note that the internal unit 10 constitutes the inhalation device 100 from which the case 20 and the shutter 23 have been removed.

The internal unit 10 comprises a chassis 40, the main board 50, a vibration device 60, a heater assembly 30, the power source unit 111C, a power source board 71, a peripheral FPC 72, a sensor FPC 73, and various sensors. The peripheral FPC 72 and the sensor FPC 73 are flexible circuit boards. The flexible circuit board is flexible and comprises conduction wiring and/or signal wiring and allows mounting of electronic components (elements) such as resistors and chips. The flexible circuit board is generally set with a thickness of 100 µm-600 µm. Moreover, the power source board 71 may be a flexible circuit board, a rigid board as described below, or a combination of a flexible board and a rigid board, but the example of a flexible circuit board is described here.

### Chassis

As shown in the exploded oblique view of fig. 6, the chassis 40 comprises: a power source holding portion 41 for holding the power source unit 111C; a board holding portion 42 for holding the main board 50; and a heater holding portion 43 for holding the heater assembly 30. The power source holding portion 41 is positioned at a lower portion of the chassis 40, and the board holding portion 42 and heater holding portion 43 are positioned on an upper portion of the chassis 40.

The power source holding portion 41 has a cylindrical shape with a portion of the side cut out, in other words a substantially semi-cylindrical shape. The power source holding portion 41 has a bottom wall portion 401, a side wall portion 402 having a circular arc shape and standing upright from the bottom wall portion 401, and an upper wall portion 403 provided at the upper end of the side wall portion 402. The power source unit 111C is arranged in a space surrounded by the bottom wall portion 401, the side wall portion 402 and the upper wall portion 403.

The board holding portion 42 is provided on a vertical wall portion 404 extending upward from the upper wall portion 403 of the power source holding portion 41. The board holding portion 42 is provided on one side (here on the front side) of the vertical wall portion 404 in the front-rear direction, and holds the main board 50.

The heater holding portion 43 is provided on the opposite side to (here on the rear side of) the board holding portion 42 of the vertical wall portion 404 in the front-rear direction. The heater holding portion 43 has a space surrounded by the vertical wall portion 404, a pair of left and right wall portions 405 extending from the vertical wall portion 404 in a front-rear direction, and an upper face of the upper wall portion 403 of the power source holding portion 41, and the heater assembly 30 is arranged in this space.

### Main board

The main board 50 is a rigid board with a plurality of electronic components (elements) mounted on both sides. The rigid board is not flexible and is generally set with a thickness of 300 µm-1600 µm. The MCU 1, LEDs 251, a charging IC (integrated circuit) 81, and a step-up DC/DC converter 82, etc. are mounted on the main board 50. The main board 50 is held in the board holding portion 42 of the chassis 40 so that the element mounting surface is oriented in the front-rear direction. Fig. 6 shows only a front surface 501 (the front face here) of the main board 50. Therefore, the charging IC 81 and the step-up DC/DC converter 82 mounted on the rear surface 502 (here on the rear side), are not shown.

A power source connecting portion 51 which electrically connects to the power source unit 111C is provided in a lower region on the front surface 501 of the main board 50. The power source connecting portion 51 is electrically connected to the power source unit 111C via a board connecting portion 710 of the power source board 71. The power source unit 111C is a cylindrical lithium ion secondary battery, and is an example of the power source unit 111B of the inhalation device 100B of fig. 2.

As shown in fig. 6, the power source unit 111C is provided with a positive electrode tab 111a and a negative electrode tab 111b. The power source unit 111C is arranged in the power source holding portion 41 of the chassis 40 so that the positive electrode tab 111a and the negative electrode tab 111b are arranged to the front. The power source board 71 is arranged in front of the power source unit 111C and the main board 50, and extends in the vertical direction. Referring also to fig. 8, a positive electrode tab connecting portion 711a and a negative electrode tab connecting portion 711b of the power source board 71 are respectively connected to the positive electrode tab 111a and the negative electrode tab 111b of the power source unit 111C, and the board connecting portion 710 is electrically connected to the power source connecting portion 51 of the main board 50. Power from the power source unit 111C is transmitted to the main board 50 through a conductive track formed on the power source board 71, and is supplied to each electronic component, such as the step-up DC/DC converter 82, for example. The power source board 71 is also provided with a power source temperature sensor 16. The power source temperature sensor 16 is a temperature sensor for detecting the temperature of the power source unit 111C. The power source temperature sensor 16 is, for example, a thermistor. The power source temperature sensor 16 is an example of the sensor unit 112B of the inhalation device 100B of fig. 2.

The USB port 26 is provided in an upper region on the rear surface 502 of the main board 50. The USB port 26 is electrically connected to the charging IC 81 by wiring formed on the main board 50.

Heater connecting portions 57a, 57b are provided on the rear surface 502 of the main board 50, in addition to the charging IC 81 and the step-up DC/DC converter 82, as shown in fig. 8. The charging IC 81 performs charging control to supply the power input from the USB port 26 to (charge) the power source unit 111C. The step-up DC/DC converter 82 steps up the voltage of the power supplied from the power source unit 111C, to generate power to supply to the heating unit 121C via the heating switch 85. The heating switch 85 is a FET (field effect transistor), for example.

A board connecting portion 121a extending from below the heater assembly 30 is connected to the heater connecting portions 57a, 57b to provide power to the heating unit 121C of the heater assembly 30. As a result, power from the power source unit 111C is supplied to the heating unit 121C of the heater assembly 30 via the main board 50.

### Vibration device

The vibration device 60 is configured by a vibrating element such as a vibrating motor, for example. As shown in fig. 6, the vibration device 60 is arranged in the power source holding portion 41 of the chassis 40 between the upper face of the power source unit 111C and the upper wall portion 403. A lead wire 61 of the vibration device 60 is connected to the peripheral FPC 72. The vibration device 60 vibrates in a predetermined vibration mode by a command from the MCU 1, to notify the user of predetermined information. For example, at the start or end of heating of the stick-type substrate 150, the vibration device 60 vibrates in a predetermined vibration mode to notify the user of the start or end of heating. The vibration device 60 is an example of the notification unit 113B of the inhalation device 100B of fig. 2.

### Heater assembly

As shown in fig. 7, the heater assembly 30 comprises the heating unit 121C, an accommodating portion 140C, and a heat insulating portion 144C. The heating unit 121C is, for example, a film heater, and is wound around the outer circumference of the accommodating portion 140C. Furthermore, the heating unit 121C and the board connecting portion 121a may be configured by a single heater FPC.

The heater assembly 30 is also provided with a stick guide 31. The stick guide 31 is provided on an upper portion of the heater assembly 30 and guides insertion/removal of the stick-type substrate 150 into/from the accommodating portion 140C. The stick guide 31 is a cylindrical member with an opening 27 and constitutes part of the accommodating portion 140C.

Furthermore, the heater assembly 30 is provided with a heater temperature sensor 15 capable of detecting the temperature of the heating unit 121C. More specifically, the heater temperature sensor 15 is provided in contact with or in proximity to the heating unit 121C between the heating unit 121C and the heat insulating portion 144C. The heater temperature sensor 15 is, for example, a thermistor.

### Sensor FPC

As shown in fig. 6, the sensor FPC 73 is arranged in the heater holding portion 43 between the vertical wall portion 404 and the heater assembly 30. At least one element and/or wiring is mounted on the sensor FPC 73. In this embodiment, the sensor FPC 73 is equipped with a stick detection sensor 12, an inhalation sensor 13, and a case temperature sensor 14. The stick detection sensor 12, the inhalation sensor 13, and the case temperature sensor 14 are examples of the sensor unit 112B of the inhalation device 100B of fig. 2.

The stick detection sensor 12 is a sensor capable of detecting the stick-type substrate 150 accommodated in the accommodating portion 140. In this embodiment, the stick detection sensor 12 is an optical sensor capable of detecting the stick-type substrate 150 based on the amount of reflected light from the light irradiated onto the accommodating portion 140. Here, amount of light is a concept that includes luminous flux, illuminance, luminous emittance, brightness, luminance, and so on. The optical sensor is an infrared ray (IR) sensor, for example.

The inhalation sensor 13 is a sensor that detects a user puffing action (inhalation action). The inhalation sensor 13 comprises, for example, a capacitor microphone, a pressure sensor, a puff thermistor, or the like. The inhalation sensor 13 is provided in proximity to the stick guide 31 in the sensor FPC 73.

The case temperature sensor 14 is a sensor that detects the temperature of the case 20. The case temperature sensor 14 is, for example, a thermistor. The case temperature sensor 14 is arranged in the sensor FPC 73 next to the inner surface of the case 20.

The sensor FPC 73 is also provided with a heater temperature sensor connecting portion 731 connecting to the heater temperature sensor 15 of the heater assembly 30. The heater temperature sensor connecting portion 731 is provided on a lower portion of the sensor FPC 73. More specifically, a lead wire 15a is connected to the heater temperature sensor 15, and the heater temperature sensor connecting portion 731 is connected to the lead wire 15a extending from underneath the heater assembly 30.

The stick detection sensor 12, inhalation sensor 13, case temperature sensor 14, and heater temperature sensor connecting portion 731 are connected to a board connecting portion 730 via signal wiring formed on the sensor FPC 73. The board connecting portion 730 is connected to a sensor FPC connecting portion 55 provided in a central region of the front surface 501 of the main board 50. As a result, detection results of the sensors are output to the MCU 1 and other components mounted on the main board 50. The sensor FPC 73 will be described in more detail later.

In the inhalation device 100 configured in this way, when the open state of the shutter 23 is detected by the shutter detection sensor 11 and the stick-type substrate 150 is detected by the stick detection sensor 12, the MCU 1 starts heating by the heating unit 121C. When a user holds the mouthpiece portion 152 of the stick-type substrate 150 in their mouth and inhales, aerosol is supplied into the user's mouth from the aerosol source of the stick-type substrate 150 heated by the heating unit 121C. The inhalation sensor 13 detects the number of inhalations, and the MCU 1 stops heating after a predetermined number of inhalations or after a predetermined time has elapsed. During heating of the inhalation device 100, the case temperature sensor 14, the heater temperature sensor 15, and the power source temperature sensor 16 measure temperatures, and the MCU 1 stops or inhibits heating by the heating unit 121C if it is determined that there is abnormal heating. Furthermore, the user is able to check the SOC of the power source unit 111C, for instance, by operating the operation unit 24, for example. The light-emitting unit 25 (LEDs 251) and the vibration device 60 notify the user of various information such as the SOC of the power source unit 111C, error displays, and so on. If the SOC of the power source unit 111C decreases, the user can connect an external power source to the USB port 26 to charge the power source unit 111C.

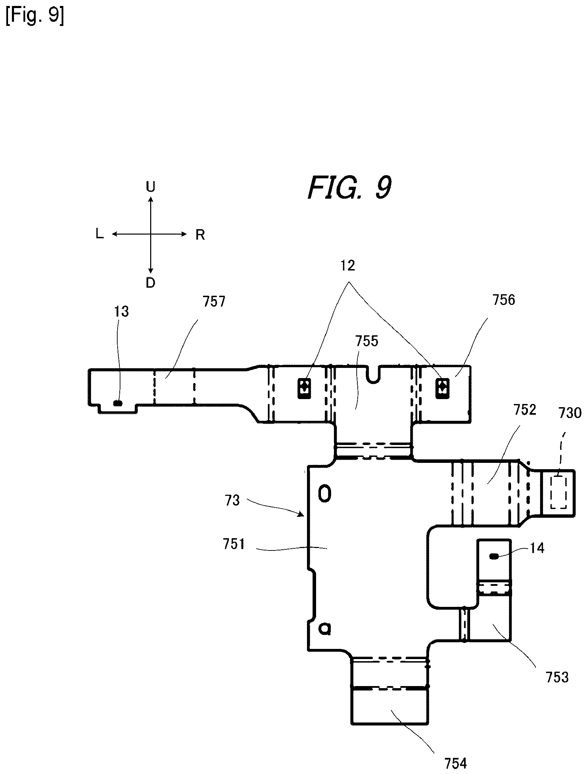

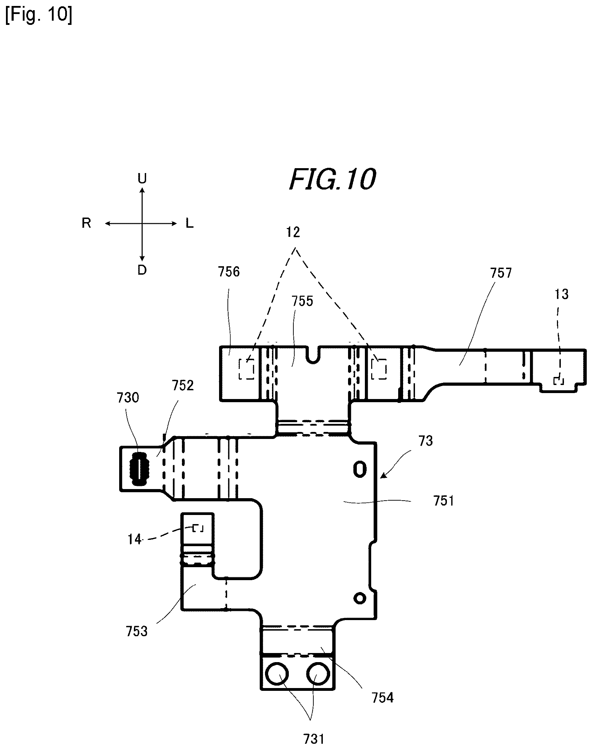

The sensor FPC 73 will be described in detail next with reference to fig. 9 and 10. Fig. 9 is a developed view of the front surface of the sensor FPC 73, and fig. 10 is a developed view of the rear surface of the sensor FPC 73. Note that the one-dot chain lines and the two-dot chain lines in fig. 9 and 10 are fold lines.

The sensor FPC 73 includes a substantially rectangular body portion 751 that is longer in a vertical direction than in a horizontal direction, a right upper extension portion 752 extending right from an upper portion of the body portion 751, a right lower extension portion 753 extending right from a lower portion of the body portion 751 then bending upward, a lower extension portion 754 extending further downward from a lower portion of the body portion 751, an upper extension portion 755 extending further upward from an upper portion of the body portion 751, an upper right extension portion 756 extending right from the upper extension portion 755, and an upper left extension portion 757 extending left from the upper extension portion 755. The upper left extension portion 757 is longer than the upper right extension portion 756, and as shown in fig. 6, in a state where the sensor FPC 73 is folded and housed in the case 20 (hereinafter, the housed state), the tip end (left end) of the upper left extension portion 757 is configured to face the body portion 751.

As described above, the stick detection sensor 12, the inhalation sensor 13, and the case temperature sensor 14 are mounted on the sensor FPC 73 and are connected to the sensor FPC connecting portion 55 of the main board 50 by the board connecting portion 730. In more specific terms, the stick detection sensor 12, the inhalation sensor 13, and the case temperature sensor 14 are mounted on the front surface of the sensor FPC 73 (the face forming the rear face of the body portion 751), as shown in fig. 9.

One stick detection sensor 12 is provided on each of the upper right extension portion 756 and the upper left extension portion 757, the stick detection sensors 12 being disposed at substantially symmetrical positions with the upper extension portion 755 interposed therebetween. The stick detection sensors 12 are disposed on the outer circumferential portion of the stick guide 31 in the housed state, and detect the stick-type substrate 150 accommodated in the accommodating portion 140.

The inhalation sensor 13 is disposed at the tip end (left end) of the upper left extension portion 757. The inhalation sensor 13 is disposed on the outer circumferential portion of the stick guide 31 in the housed state, and detects a pressure change or a temperature change of air flowing from the vicinity of the opening 27 to the accommodating portion 140 in accordance with a puff action (inhalation action).

The case temperature sensor 14 is disposed at the tip end (upper end) of the right lower extension portion 753. The case temperature sensor 14 is close to a wall surface of the case 20 in the housed state, and detects a temperature of the case 20. The two stick detection sensors 12 and the inhalation sensor 13 are arranged at substantially the same positions in the vertical direction (longitudinal direction of the sensor FPC), whereas the case temperature sensor 14 is arranged at a position in the vertical direction different from these, which is below in this embodiment.

The board connecting portion 730 is mounted on the rear surface of the sensor FPC 73 (the face forming the front face of the body portion 751), as shown in fig. 10. The board connecting portion 730 is disposed at the tip end (right end) of the right upper extension portion 752, i.e., at a position between the vertical direction positions of the two stick detection sensors 12 and the inhalation sensor 13, and the vertical direction position of the case temperature sensor 14.

By mounting the stick detection sensors 12, the inhalation sensor 13, and the case temperature sensor 14 in this manner on the sensor FPC 73, which is a flexible circuit board thinner and more flexible than a rigid board, it is possible to reduce the size of the main board 50 which is a rigid board. Further, these sensors 12-14 are electrically connected together to the sensor FPC connecting portion 55 of the main board 50 by the board connecting portion 730 through signal wiring 738, 739 formed on the sensor FPC 73. Connections of each of the sensors 12-14 to the main board 50 can therefore be shared, making it possible to reduce the size of the main board 50 which is a rigid board.

The board connecting portion 730 of the sensor FPC 73 and the sensor FPC connecting portion 55 of the main board 50 are preferably a connector 19 formed by a plug (male connector) and a receptacle (female connector). This simplifies connection work. As shown in fig. 8, the sensor FPC connecting portion 55 is connected to the MCU 1 via signal wiring formed on the main board 50.

Note that, in this embodiment, three sensors, i.e., the stick detection sensor 12, the inhalation sensor 13, and the case temperature sensor 14, were mounted on the sensor FPC 73, but as long as at least one element and/or wiring is mounted, other elements may also be mounted instead of or as well as these sensors. Examples of other elements may be the power source temperature sensor 16 or an element other than a sensor. That is, at least one element and/or wiring may be mounted on the sensor FPC 73 regardless of the type of sensor, and connections to the main board 50 may be shared.

Furthermore, even if the arrangement positions (longitudinal direction of the sensor FPC) of the sensors differ, connections to the main board 50 are preferably shared. In this embodiment, the case temperature sensor 14, which is disposed at a different position in the vertical direction (longitudinal direction of the sensor FPC) from the two stick detection sensors 12 and the inhalation sensor 13, is also connected to the sensor FPC connecting portion 55 of the main board 50 via the board connecting portion 730.

In this case, the positions of the connections to the main board 50 are preferably disposed between the sensor positioned on one end side and the sensor positioned on the other end side in the longitudinal direction of the sensor FPC. In this embodiment, the board connecting portion 730 is disposed between the position in the vertical direction (longitudinal direction of the sensor FPC) of the two stick detection sensors 12 and the inhalation sensor 13, and the position in the vertical direction (longitudinal direction of the sensor FPC) of the case temperature sensor 14. Thus, the length of signal wiring from each sensor to the board connecting portion 730 can be equalized.

Furthermore, as shown in fig. 8, the inhalation sensor 13 and the case temperature sensor 14 are supplied with an input voltage VCC1, which is an input voltage of the same potential. Accordingly, the inhalation sensor 13 and the case temperature sensor 14 may be connected to the signal wiring 738 of the same potential and connected to the main board 50 at the same electrical contact 55a. By mounting sensors connected to signal wiring of the same potential on the sensor FPC 73 in this manner, it is possible to use the same electrical contact 55a on the sensor FPC connecting portion 55, and thus it is not necessary to provide a plurality of electrical contacts on the sensor FPC connecting portion 55 for each sensor, and the main board 50 can be made compact.

Furthermore, in this embodiment, the heater temperature sensor 15 connected to the sensor FPC 73 via the lead wire 15a is also supplied with the same input voltage VCC1 as the inhalation sensor 13 and the case temperature sensor 14, is connected to signal wiring of the same potential, and is connected to the main board 50 at the same electrical contact 55a. Thus, the main board 50 can be made even more compact.

An input voltage VCC2 is supplied to the two stick detection sensors 12. Accordingly, the two stick detection sensors 12 may be connected to the signal wiring 739 of the same potential and connected to the main board 50 at the same electrical contact 55b. The input voltage VCC2 of the two stick detection sensors 12 and the input voltage VCC1 of the inhalation sensor 13 and the case temperature sensor 14 may be the same or different. If the input voltage VCC1 and the input voltage VCC2 are the same, the electrical contact 55a and the electrical contact 55b may be shared or different. On the other hand, if the input voltage VCC1 and the input voltage VCC2 are different, the electrical contact 55a and the electrical contact 55b must be different. Thus, even with sensors having different input voltages, it is possible to mount the sensors on the sensor FPC 73 and share connections to the main board 50 by using different electrical contacts.

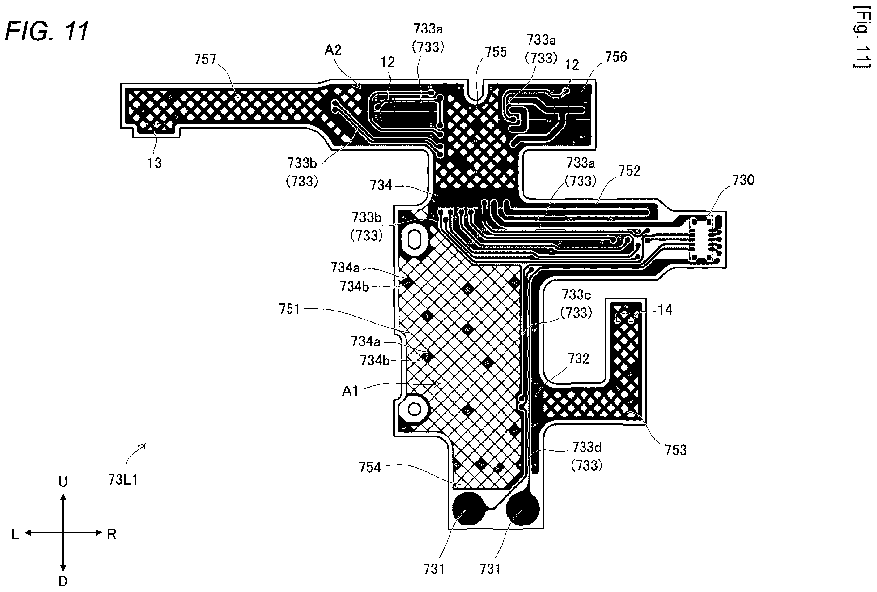

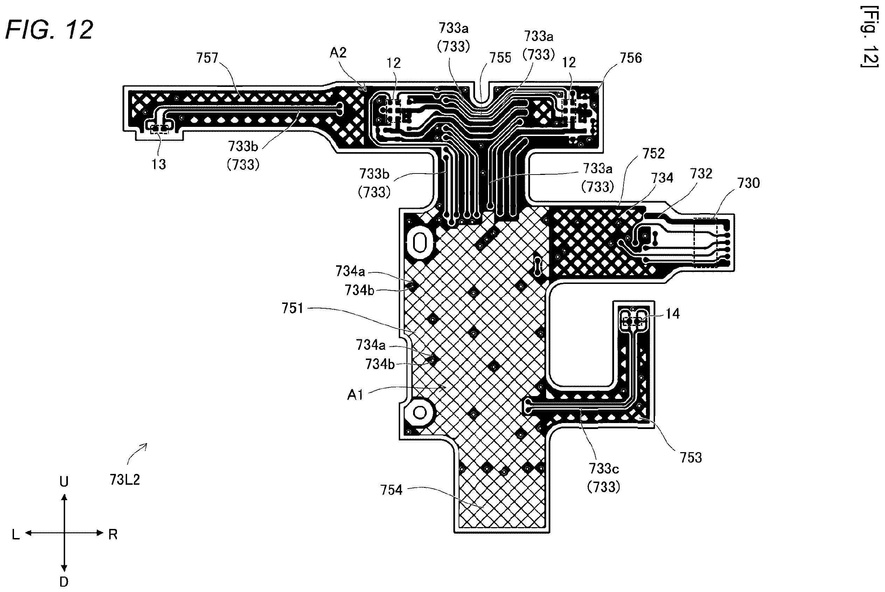

The sensor FPC 73 is a stacked wiring board in which a first wiring layer 73L1 and a second wiring layer 73L2 are stacked. Fig. 11 is a cross-sectional view in which the first wiring layer 73L1 is seen from the front surface side of the sensor FPC 73, and fig. 12 is a cross-sectional view in which the second wiring layer 73L2 is seen from the front surface side of the sensor FPC 73.

The first wiring layer 73L1 and the second wiring layer 73L2 are stacked in the sensor FPC 73 so that the first wiring layer 73L1 is closer to the rear surface side (front face side of the body portion 751) than the second wiring layer 73L2, and so that the second wiring layer 73L2 is closer to the front surface side (rear face side of the body portion 751).

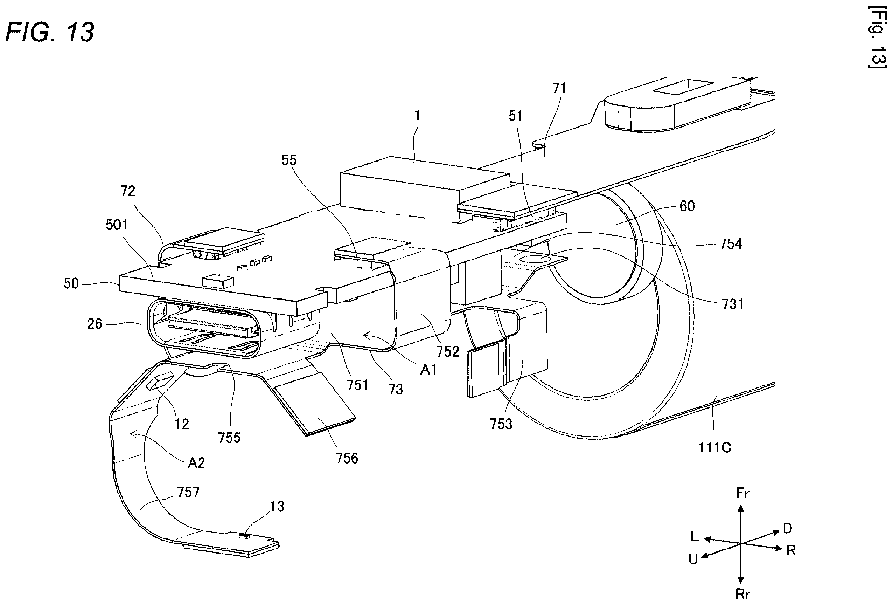

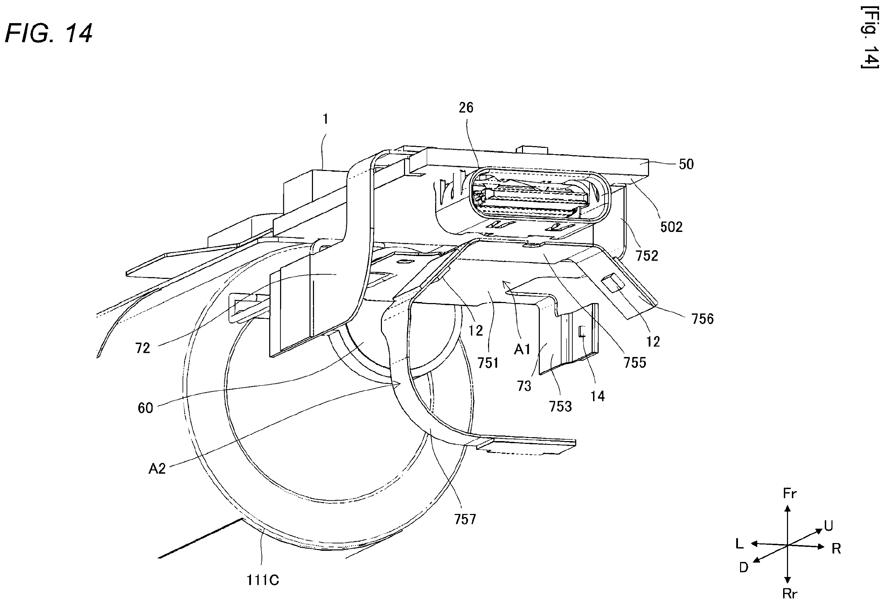

As shown in fig. 6 and 11-14, the sensor FPC 73 has a first region A1 close to the heating unit 121C, and a second region A2 which is further from the heating unit 121C than the first region A1. In this embodiment, the first region A1 constitutes the body portion 751, and the second region A2 constitutes the upper extension portion 755, the upper right extension portion 756, and the upper left extension portion 757.

As shown in fig. 6, 13 and 14, the first region A1 of the sensor FPC 73 is disposed between the heating unit 121C and the main board 50 which is a rigid board, the first region A1 being arranged so as to face the heating unit 121C.

The first region A1 of the sensor FPC 73 then forms a planar surface facing the main board 50.

Furthermore, the sensor FPC 73 is arranged so that the second region A2 is at a position closer to the mouthpiece portion 152 than the heating unit 121C.

As shown in fig. 11 and 12, printed wiring 732 including signal wiring 733 and ground wiring 734 is formed on the first wiring layer 73L1 and the second wiring layer 73L2. The printed wiring 732 is formed by a metallic thin film of a conductive material. The printed wiring 732 is formed by a copper thin film in this embodiment. Metals including copper which are used as conductive materials generally have higher thermal conductivity than resins, etc.

The signal wiring 733 formed on the first wiring layer 73L1 and the second wiring layer 73L2 constitutes the signal wiring 738 and the signal wiring 739 described above. The signal wiring 733 formed on the first wiring layer 73L1 and the second wiring layer 73L2 comprises: first signal wiring 733a connecting the board connecting portion 730 and the stick detection sensor 12; second signal wiring 733b connecting the board connecting portion 730 and the inhalation sensor 13; third signal wiring 733c connecting the board connecting portion 730 and the case temperature sensor 14; and fourth signal wiring 733d connecting the board connecting portion 730 and the heater temperature sensor connecting portion 731.

The first signal wiring 733a passes from the board connecting portion 730 through the right upper extension portion 752, body portion 751, and upper extension portion 755, then connects to each of the two stick detection sensors 12 through the upper right extension portion 756 or the upper left extension portion 757.

The second signal wiring 733b passes from the board connecting portion 730 through the right upper extension portion 752, body portion 751, upper extension portion 755, and upper left extension portion 757, then connects to the inhalation sensor 13.

The third signal wiring 733c passes from the board connecting portion 730 through the right upper extension portion 752, right end vicinity of the body portion 751, and right lower extension portion 753, then connects to the case temperature sensor 14.

The fourth signal wiring 733d passes from the board connecting portion 730 through the right upper extension portion 752, right end vicinity of the body portion 751, and lower extension portion 754, then connects to the heater temperature sensor connecting portion 731.

The first signal wiring 733a to the fourth signal wiring 733d are formed on the first wiring layer 73L1 and the second wiring layer 73L2, with the first signal wiring 733a to the fourth signal wiring 733d on the first wiring layer 73L1 and the first signal wiring 733a to the fourth signal wiring 733d on the second wiring layer 73L2 being connected through vias.

The wiring density in the first region A1 of the sensor FPC 73, including the signal wiring 733 and the ground wiring 734, is lower than the wiring density in the second region A2.

More specifically, the wiring density in the first region A1 of each of the first wiring layer 73L1 and the second wiring layer 73L2 is lower than the wiring density in the second region A2.

The wiring density in the first region A1 of the sensor FPC 73, which is close to the heating unit 121C, is thus made lower than the wiring density in the second region A2 which is further away from the heating unit 121C than the first region A1, thereby making it possible to reduce dissipation of the heat generated by the heating unit 121C from the sensor FPC 73, and high energy efficiency can therefore be achieved.

Furthermore, the wiring density in the first region A1 of each of the first wiring layer 73L1 and the second wiring layer 73L2 is lower than the wiring density in the second region A2, therefore making it possible to further reduce dissipation of the heat generated by the heating unit 121C from the sensor FPC 73, and to achieve even higher energy efficiency.

As described above, the first region A1 of the sensor FPC 73 is disposed between the heating unit 121C and the main board 50 which is a rigid board, the first region A1 being arranged so as to face the heating unit 121C. By this means, the heat generated by the heating unit 121C is shielded by the sensor FPC 73 which is disposed between the heating unit 121C and the main board 50, and it is possible to suppress heat transfer to the main board 50 and to elements such as the MCU 1 mounted on the main board 50.

In addition, the low-wiring-density first region A1 of the sensor FPC 73 is arranged so as to face the heating unit 121C, and the heat generated by the heating unit 121C is therefore better shielded by the sensor FPC 73, enabling higher energy efficiency to be achieved.

The first region A1 of the sensor FPC 73 forms a planar surface facing the main board 50, so it is possible to reduce the size of the inhalation device 100 and the power supply unit 110.

Meanwhile, the high-wiring-density second region A2 of the sensor FPC 73 is arranged at a position closer to the mouthpiece portion 152 than the heating unit 121C, and the degree of integration of the sensor FPC 73 can therefore be improved while suppressing transfer of the heat generated by the heating unit 121C to the main board 50 and to elements such as the MCU 1 mounted on the main board 50.

The stick detection sensor 12 is mounted on the front surface of the sensor FPC 73, that is, the surface on the second wiring layer 73L2 side in the stacking direction of the first wiring layer 73L1 and the second wiring layer 73L2. The wiring density in a region of the first wiring layer 73L1 overlapping the stick detection sensor 12, as seen from the stacking direction of the first wiring layer 73L1 and the second wiring layer 73L2, is higher than the wiring density in the first region A1. In this embodiment, the ground wiring 734 in the region of the first wiring layer 73L1 overlapping the stick detection sensor 12 constitutes a solid pattern in which a film of wiring material, rather than a mesh, is formed over the entire ground region.

The region of the first wiring layer 73L1 overlapping the stick detection sensor 12 therefore has higher rigidity and is less likely to bend by virtue of the wiring material. This makes it possible to suppress sagging of the sensor FPC 73 under the deadweight of the stick detection sensor 12.

Furthermore, the ground wiring 734 is formed in the first region A1 and the second region A2 of the first wiring layer 73L1, and in the first region A1 and the second region A2 of the second wiring layer 73L2.

By forming the ground wiring 734 in both the first region A1 and the second region A2 of the first wiring layer 73L1 and the first region A1 and the second region A2 of the second wiring layer 73L2 in this way, the sensors 12-14 can be easily connected to the ground wiring 734, even if the sensors 12-14 are mounted on both the front surface and the rear surface of the sensor FPC 73, therefore improving the degree of freedom in arranging the sensors 12-14 on the sensor FPC 73.

The ground wiring 734 formed in the first region A1 and the second region A2 of the first wiring layer 73L1, and in the first region A1 and the second region A2 of the second wiring layer 73L2 is at least partly formed as a mesh. The ground wiring 734 is formed as a diagonal grid mesh in this embodiment. It should be noted that the mesh shape of the ground wiring 734 may equally be a hexagonal honeycomb mesh, a rectangular mesh, or a mesh with multiple circular cutouts.

This allows the wiring density of the ground wiring 734 to be easily set with greater freedom by varying the coarseness of the mesh of the mesh-form ground wiring 734.

A solid region 734a in which at least one mesh-form meshed part is closed off is formed in the mesh part of the ground wiring 734. The solid region 734a formed in the mesh part of the ground wiring 734 in the first wiring layer 73L1, and the solid region 734a formed in the mesh part of the ground wiring 734 in the second wiring layer 73L2 are formed in overlapping regions in the stacking direction of the first wiring layer 73L1 and the second wiring layer 73L2. A via 734b connecting the ground wiring 734 in the first wiring layer 73L1 and the ground wiring 734 in the second wiring layer is then provided in the solid region 734a.

By this means, the ground wiring 734 in the first wiring layer 73L1 and the ground wiring 734 in the second wiring layer 73L2 are formed so as to face each other, but since the via 734b enables conduction, it is possible to reduce capacitance generated by the ground wiring 734 in the first wiring layer 73L1 and the ground wiring 734 in the second wiring layer 73L2 which face each other.

**In** addition, the solid region 734a is formed in the mesh part of the ground wiring 734 in the first wiring layer 73L1 and the mesh part of the ground wiring 734 in the second wiring layer 73L2, and the via 734b is provided in this solid region 734a, thereby enabling the via 734b to be easily provided, so the wiring density in the mesh part of the ground wiring 734 in the first wiring layer 73L1 and in the mesh part of the ground wiring 734 in the second wiring layer 73L2 can be set with greater freedom.

A plurality of solid regions 734a are provided in each of the first wiring layer 73L1 and the second wiring layer 73L2, and the vias 734b are provided in the plurality of solid regions 734a. A plurality of the vias 734b are therefore formed in the first wiring layer 73L1 and the second wiring layer 73L2.

By this means, it is possible to further reduce capacitance generated by the ground wiring 734 in the first wiring layer 73L1 and the ground wiring 734 in the second wiring layer 73L2 which face each other.

The signal wiring 733 and the ground wiring 734 are formed in the right lower extension portion 753 in this embodiment. The wiring density in the first region A1 of the sensor FPC 73, including the signal wiring 733 and the ground wiring 734, is then lower than the wiring density in the right lower extension portion 753. More specifically, the wiring density in the first region A1 of each of the first wiring layer 73L1 and the second wiring layer 73L2 is lower than the wiring density in the right lower extension portion 753.

Furthermore, the signal wiring 733 and the ground wiring 734 are formed in the right upper extension portion 752. The wiring density in the first region A1 of the sensor FPC 73, including the signal wiring 733 and the ground wiring 734, is then lower than the wiring density in the right upper extension portion 752. More specifically, the wiring density in the first region A1 of each of the first wiring layer 73L1 and the second wiring layer 73L2 is lower than the wiring density in the right upper extension portion 752.

Although various embodiments have been described above with reference to the drawings, it goes without saying that the present invention is not limited to such examples. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

For example, the positions on the sensor FPC 73 of the stick detection sensor 12, the inhalation sensor 13, and the case temperature sensor 14 are not limited to those described, and may be modified as appropriate.

Furthermore, for example, the inhalation device 100A may further comprise a heating unit for heating the flavor source 131, in addition to the heating unit 121A, and the first region A1 may be a region close to the heating unit for heating the flavor source 131.

The present specification sets forth at least the following features. Note that corresponding components, etc. in the embodiment described above are shown in parentheses, but are not limited thereto.
(1) A power supply unit (power supply unit 110) for an aerosol-generating device (inhalation device 100, 100A, 100B), comprising: a power source (power source unit 111A-111C) capable of supplying power to a heating unit (heating unit 121A-121C) for heating at least one of an aerosol source (stick-type substrate 150) and a flavor source (flavor source 131); and
   a flexible printed wiring board (sensor FPC 73) on which at least one element (stick detection sensor 12, inhalation sensor 13, case temperature sensor 14) and/or wiring (signal wiring 733, ground wiring 734) is mounted,
   wherein
   the flexible printed wiring board has a first region (first region A1) close to the heating unit, and a second region (second region A2) which is further from the heating unit than the first region, and
   a wiring density in the first region of the flexible printed wiring board is lower than a wiring density in the second region.
   According to (1), the wiring density in the first region of the flexible printed wiring board, which is close to the heating unit, is made lower than the wiring density in the second region which is further from the heating unit than the first region, thereby making it possible to reduce dissipation of the heat generated by the heating unit from the flexible printed wiring board, and high energy efficiency can therefore be achieved.
(2) The power supply unit for an aerosol-generating device as disclosed in (1), wherein a first wiring layer (first wiring layer 73L1) and a second wiring layer (second wiring layer 73L2) are stacked in the flexible printed wiring board, and
   the wiring density in the first region of each of the first wiring layer and the second wiring layer is lower than the wiring density in the second region.
   According to (2), the wiring density in the first region of each of the first wiring layer and the second wiring layer is lower than the wiring density in the second region, therefore making it possible to further reduce dissipation of the heat generated by the heating unit from the flexible printed wiring board, and to achieve even higher energy efficiency.
(3) The power supply unit for an aerosol-generating device as disclosed in (2), wherein a sensor (stick detection sensor 12, inhalation sensor 13, case temperature sensor 14) is mounted on a face of the flexible printed wiring board on the second wiring layer side, in a stacking direction of the first wiring layer and the second wiring layer, and
   the wiring density in a region of the first wiring layer overlapping the sensor, as seen from the stacking direction, is higher than the wiring density in the first region.
   According to (3), a region of the first wiring layer overlapping the sensor in the stacking direction has higher rigidity and is less likely to bend by virtue of the wiring material. This makes it possible to suppress sagging of the flexible printed wiring board under the deadweight of the sensor.
(4) The power supply unit for an aerosol-generating device as disclosed in (2) or (3), wherein
   ground wiring (ground wiring 734) is formed in the first region and the second region of the first wiring layer, and in the first region and the second region of the second wiring layer.
   According to (4), by forming the ground wiring in both the first region and the second region of the first wiring layer and the first region and the second region of the second wiring layer, sensors can be easily connected to the ground wiring, even if the sensors are mounted on both the front surface and the rear surface of the flexible printed wiring board, therefore improving the degree of freedom in arranging the sensors on the flexible printed wiring board.
(5) The power supply unit for an aerosol-generating device as disclosed in (4), wherein a via (via 734b) connecting the ground wiring in the first wiring layer and the ground wiring in the second wiring layer is formed in the first region of the first wiring layer and the second wiring layer and/or in the second region of the first wiring layer and the second wiring layer.
   According to (5), the ground wiring in the first wiring layer and the ground wiring in the second wiring layer are formed so as to face each other, but since the via enables conduction, it is possible to reduce capacitance generated by the ground wiring in the first wiring layer and the ground wiring in the second wiring layer which face each other.
(6) The power supply unit for an aerosol-generating device as disclosed in (5), wherein a plurality of vias are formed in the first wiring layer and the second wiring layer.
   According to (6), a plurality of vias are formed in the first wiring layer and the second wiring layer, so it is possible to further reduce capacitance generated by the ground wiring in the first wiring layer and the ground wiring in the second wiring layer which face each other.
(7) The power supply unit for an aerosol-generating device as disclosed in (4), wherein at least a portion of the ground wiring is formed as a mesh.
   According to (7), at least a portion of the ground wiring is formed as a mesh, so the wiring density of the ground wiring can be easily set with greater freedom by varying the coarseness of the mesh of the mesh-form ground wiring.
(8) The power supply unit for an aerosol-generating device as disclosed in (7), wherein a solid region (solid region 734a) in which at least one mesh-form meshed part is closed off is formed in the first region of the first wiring layer and the second wiring layer and/or in the second region of the first wiring layer and the second wiring layer, and
   a via (via 734b) connecting the ground wiring in the first wiring layer and the ground wiring in the second wiring layer is formed in the solid region.
   According to (8), the ground wiring in the first wiring layer and the ground wiring in the second wiring layer are formed so as to face each other, but since the via enables conduction, it is possible to reduce capacitance generated by the ground wiring in the first wiring layer and the ground wiring in the second wiring layer which face each other. **In** addition, the solid region is formed in the mesh part of the ground wiring in the first wiring layer and the mesh part of the ground wiring in the second wiring layer, and a via is provided in this solid region, thereby enabling the via to be easily provided, so the wiring density in the mesh part of the ground wiring in the first wiring layer and in the mesh part of the ground wiring in the second wiring layer can be set with greater freedom.
(9) The power supply unit for an aerosol-generating device as disclosed in (8), wherein a plurality of vias are formed in the first wiring layer and the second wiring layer.
   According to (9), a plurality of vias are formed in the first wiring layer and the second wiring layer, so it is possible to further reduce capacitance generated by the ground wiring in the first wiring layer and the ground wiring in the second wiring layer which face each other.
(10) The power supply unit for an aerosol-generating device as disclosed in any of (1)-(9), wherein
   the flexible printed wiring board
   is disposed so that the first region faces the heating unit.
   According to (10), the low-wiring-density first region of the flexible printed wiring board is arranged so as to face the heating unit, and the heat generated by the heating unit is therefore better shielded by the flexible printed wiring board, enabling higher energy efficiency to be achieved.
(11) The power supply unit for an aerosol-generating device as disclosed in (10), wherein
   the flexible printed wiring board
   is disposed so that the second region is at a position closer to a mouthpiece portion (mouthpiece portion 152) of the aerosol-generating device than the heating unit.
   According to (11), the high-wiring-density second region of the flexible printed wiring board is arranged at a position closer to the mouthpiece portion of the aerosol-generating device than the heating unit, and the degree of integration of the flexible printed wiring board can therefore be improved while suppressing dissipation of the heat generated by the heating unit from the flexible printed wiring board.
(12) The power supply unit for an aerosol-generating device as disclosed in any of (1)-(11),
   further comprising a rigid board (main board 50) on which a controller (MCU 1) for controlling the aerosol-generating device is mounted, wherein
   the flexible printed wiring board
   is disposed so that the first region is positioned between the heating unit and the rigid board.
   According to (12), the heat generated by the heating unit is shielded by the flexible printed wiring board which is disposed between the heating unit and the rigid board, and it is possible to suppress heat transfer to the rigid board and to elements such as the controller mounted on the rigid board.
(13) The power supply unit for an aerosol-generating device as disclosed in (12), wherein
   the first region forms a planar surface facing the rigid board.
   According to (13), the first region of the flexible printed wiring board forms a planar surface facing the rigid board, so it is possible to reduce the size of the power supply unit of the aerosol-generating device.
(14) An aerosol-generating device (inhalation device 100, 100A, 100B), comprising: a heating unit (heating unit 121A-121C) for heating at least one of an aerosol source (stick-type substrate 150) and a flavor source (flavor source 131);
   a power source (power source unit 111A-111C) capable of supplying power to the heating unit; and
   a flexible printed wiring board (sensor FPC 73) on which at least one element (stick detection sensor 12, inhalation sensor 13, case temperature sensor 14) and/or wiring (signal wiring 733, ground wiring 734) is mounted,
   wherein
   the flexible printed wiring board has a first region (first region A1) close to the heating unit, and a second region (second region A2) which is further from the heating unit than the first region, and
   a wiring density in the first region of the flexible printed wiring board is lower than a wiring density in the second region.

According to (14), the wiring density in the first region of the flexible printed wiring board, which is close to the heating unit, is made lower than the wiring density in the second region which is further from the heating unit than the first region, thereby making it possible to reduce dissipation of the heat generated by the heating unit from the flexible printed wiring board, and high energy efficiency can therefore be achieved.

### REFERENCE SIGNS LIST

1 MCU (controller)
12 Stick detection sensor (element, sensor)
13 Inhalation sensor (element, sensor)
14 Case temperature sensor (element, sensor)
50 Main board (rigid board)
73 Sensor FPC (flexible printed wiring board)
73L1 First wiring layer
73L2 Second wiring layer
733 Signal wiring (wiring)
734 Ground wiring (wiring)
734a Solid region
734b Via
100, 100A, 100B Inhalation device (aerosol-generating device)
110 Power supply unit
111A-111C Power source unit (power source)
121A-121C Heating unit
131 Flavor source
150 Stick-type substrate (aerosol source)
152 Mouthpiece portion
A1 First region
A2 Second region

## Claims

1. A power supply unit for an aerosol-generating device, comprising: a power source capable of supplying power to a heating unit for heating at least one of an aerosol source and a flavor source; and
a flexible printed wiring board on which at least one element and/or wiring is mounted,
wherein
the flexible printed wiring board has a first region close to the heating unit, and a second region which is further from the heating unit than the first region, and
a wiring density in the first region of the flexible printed wiring board is lower than a wiring density in the second region.

2. The power supply unit for an aerosol-generating device as claimed in claim 1, wherein
a first wiring layer and a second wiring layer are stacked in the flexible printed wiring board, and
the wiring density in the first region of each of the first wiring layer and the second wiring layer is lower than the wiring density in the second region.

3. The power supply unit for an aerosol-generating device as claimed in claim 2, wherein
a sensor is mounted on a face of the flexible printed wiring board on the second wiring layer side, in a stacking direction of the first wiring layer and the second wiring layer, and
the wiring density in a region of the first wiring layer overlapping the sensor, as seen from the stacking direction, is higher than the wiring density in the first region.

4. The power supply unit for an aerosol-generating device as claimed in claim 2 or 3, wherein ground wiring is formed in the first region and the second region of the first wiring layer, and in the first region and the second region of the second wiring layer.

5. The power supply unit for an aerosol-generating device as claimed in claim 4, wherein
a via connecting the ground wiring in the first wiring layer and the ground wiring in the second wiring layer is formed in the first region of the first wiring layer and the second wiring layer and/or in the second region of the first wiring layer and the second wiring layer.

6. The power supply unit for an aerosol-generating device as claimed in claim 5, wherein
a plurality of vias are formed in the first wiring layer and the second wiring layer.

7. The power supply unit for an aerosol-generating device as claimed in claim 4, wherein
at least a portion of the ground wiring is formed as a mesh.

8. The power supply unit for an aerosol-generating device as claimed in claim 7, wherein
a solid region in which at least one mesh-form meshed part is closed off is formed in the first region of the first wiring layer and the second wiring layer and/or in the second region of the first wiring layer and the second wiring layer, and
a via connecting the ground wiring in the first wiring layer and the ground wiring in the second wiring layer is formed in the solid region.

9. The power supply unit for an aerosol-generating device as claimed in claim 8, wherein
a plurality of vias are formed in the first wiring layer and the second wiring layer.

10. The power supply unit for an aerosol-generating device as claimed in any one of claims 1 to 9, wherein
the flexible printed wiring board
is disposed so that the first region faces the heating unit.

11. The power supply unit for an aerosol-generating device as claimed in claim 10, wherein
the flexible printed wiring board
is disposed so that the second region is at a position closer to a mouthpiece portion of the aerosol-generating device than the heating unit.

12. The power supply unit for an aerosol-generating device as claimed in any one of claims 1 to 11,
further comprising a rigid board on which a controller for controlling the aerosol-generating device is mounted, wherein
the flexible printed wiring board
is disposed so that the first region is positioned between the heating unit and the rigid board.

13. The power supply unit for an aerosol-generating device as claimed in claim 12, wherein
the first region forms a planar surface facing the rigid board.

14. An aerosol-generating device comprising: a heating unit for heating at least one of an aerosol source and a flavor source;
a power source capable of supplying power to the heating unit; and
a flexible printed wiring board on which at least one element and/or wiring is mounted,
wherein
the flexible printed wiring board has a first region close to the heating unit, and a second region which is further from the heating unit than the first region, and
a wiring density in the first region of the flexible printed wiring board is lower than a wiring density in the second region.
